# EUROPÄISCHE PATENTSCHRIFT

(11) **EP 2 363 552 B1**
(45) Veröffentlichungstag und Bekanntmachung des Hinweises auf die Patenterteilung: **04.07.2012**
(21) Anmeldenummer: 10002169.0
(22) Anmeldetag: 03.03.2010
(51) Int. Cl.: E04G 15/06, F16L 5/10, F16L 21/03

(54) **Verwendung eines Aufsatzstückes zum Aufsetzen auf eine Dichtpackung**
Use of an attachment piece for attachment to a seal
Utilisation d'une réhausse pour le réhaussement sur un bourrage d'étanchéité

(43) Veröffentlichungstag der Anmeldung: 07.09.2011
(73) Patentinhaber: Hauff-Technik GmbH & Co. KG, 89542 Herbrechtingen (DE)
(72) Erfinder: Heck, Martin, 89447 Zöschingen (DE); Kurz, Ralf, 89537 Giengen (DE)
(74) Vertreter: Szynka, Dirk

(56) Entgegenhaltungen:
- DE-A1- 3 900 873
- DE-U1- 20 002 216
- GB-A- 950 029
- US-B1- 6 450 505

## Beschreibung

Die vorliegende Erfindung betrifft die Verwendung eines auf ein Rohr aufschiebbaren Aufsatzstückes mit einer zum Hindurchführen einer Leitung ausgelegten Dichtpackung, die in ein Wand- oder Bodenelement eingebaut wird.

Als Bestandteil von Dichtpackungen dieser Art ist ein Rohrelement vorgesehen, welches nach dem Einbau der Dichtpackung eine Durchgangsöffnung zwischen zwei Seiten des Wand- oder Bodenelements freihält. Durch diese Durchgangsöffnung kann eine Leitung hindurchgeführt und beispielsweise mit einer weiteren Dichtung, welche in das Rohrelement eingeschoben wird und die Leitung umschließt, gegen das Rohrelement gedichtet werden. Zum Schutz der Leitung vor Umwelteinflüssen oder mechanischer Beschädigung wird diese dabei typischerweise in einem Schutzrohr durch das Erdreich an beispielsweise das Wandelement herangeführt. Ein solches Schutzrohr wird dabei aus mehreren Jewells einige Meter langen Schutzrohrstücken zusammengesetzt, welche zu diesem Zweck an einem Ende eine angeformte Rohranschlussmuffe, also einen sich erweitemden Durchmesser, aufweisen: Indem das an der Gebäudewand liegende Schutzrohrende in die Dichtpackung eingeschoben wird, kann das Schutzrohr an dieser Stelle auf einfache Weise abgedichtet werden, und der Schutz der Leitung ist bis zur Wand gewährleistet.

Zur Herstellung einer Dichtpackung, in die ein Schutzrohr eingeschoben werden kann, wird im Stand der Technik ein Schutzrohrstück mit Rohranschlussmuffe als Rohrelement der Dichtpackung verwendet. Da die Länge von Schutzrohrstücken jedoch die typischen Dicken von Wand- oder Bodenelementen um ein Vielfaches übersteigt, fällt beim Ablängen in erheblichen Umfang Verschnitt an. Andererseits würde die Herstellung eines Rohrelements passender Länge mit angeformter Rohranschlussmuffe einen Aufwand erfordern, der dann durch die Kompatibilität des Rohrelements zu nur genau einem Schutzrohrtyp mit passendem Durchmesser nachteilig ist.

Die US 6,450,505 B1 zeigt ein Aufsatzstück, das bei einem Vergießen in einer Wand eines Faulbehälters von einem Zylinder in Position gehalten wird, wobei der Zylinder bei einer speziellen Ausführungsform auch nach dem Aushärten des Betons in der Wand verbleibt. Durch den Boden des Aufsatzstückes wird dann ein Rohr geführt, das zum Einleiten der für den Faulprozess vorgesehenen Schlämme ausgelegt ist.

Die GB 950 029 A zeigt eine Dichtmanschette, die auf ein durch einen Boden vorverlegtes Rohr gesetzt wird und dieses dann gegen eine hindurchgeführte Leitung dichtet.

Die DE 200 02 216 U1 betrifft ein Dichtelement zur Verbindung eines WC-Spülkastens mit einem Ablaufrohr.

Die DE 39 00 873 A1 zeigt unterschiedliche Möglichkeiten, um eine Innenseitig umlaufende Dichtlippe in eine Muffe eines Betonrohres einzugießen.

Der vorliege Erfindung liegt die Aufgabe zugrunde, eine vorteilhafte Verwendung eines gegenüber dem Stand der Technik verbesserten Aufsatzstücks und eine Leitungsdurchführungsanordnung anzugeben, welche gegenüber dem Stand der Technik verbesserte Gebrauchseigenschaften bei ökonomischen Vorteilen bietet.

Erfindungsgemäß wird diese Aufgabe durch die Verwendung eines Aufsatzstückes zum Aufsetzen auf ein Rohrelement einer Dichtpackung und zum Hindurchführen einer Leitung gelöst, wobei das Aufsatzstück in einer Richtung solchermaßen auf das Rohrelement aufgeschoben ist, dass es an einem Innenwandbereich, einem diesem entgegengesetzten Außenwandbereich sowie an einer diese beiden verbindenden Stirnfläche des Rohrelements anliegt. Das Aufsatzstück gibt dabei eine Durchgangsöffnung frei, in welche aus derselben Richtung ein zusätzliches Rohr solchermaßen bis zu einem Anschlag am Aufsatrztück in die Durchgangsöffnung eingeschoben ist, dass ein Element des Aufsatzstückes zwischen dem Innenwandbereich des Rohrelements und einem diesem gegenüberliegenden Außenwandbereich des zusätzlichen Rohres angeordnet ist; die Leitung wird durch das Rohrelement und das zusätzliche Rohr hindurchgeführt.

Durch die erfindungsgemäße Verwendung des Aufsatzstückes entfällt die Notwendigkeit, für die Dichtpackung ein Rohrelement mit Rohranschlussmuffe vorzusehen. Das Rohrelement kann also beispielsweise von einem als Meterware erhältlichen Rohr abgetrennt werden, ohne dass Verschnitt entsteht, weil das übrige Rohr zur Herstellung weiterer Dichtpackungen verwendet werden kann.

Das Aufsatzstück wird bereits vor dem Einbau der Dichtpackung auf das Rohrelement gesetzt, wobei durch die Anlage an sowohl Innen- und entgegengesetztem Außenwandbereich des Rohrelements als auch an der diese beiden verbindenden Stirnfläche zumindest in Rohrrichtung eine bevorzugte Position vorgegeben ist, wenn auch das Aufsatzstück noch nicht zwingend in dieser fixiert ist. Die Stirnfläche des Rohrelements ist hierbei nicht notwendigerweise eine senkrecht zur Außen- bzw. Innenwand des Rohrelements ausgebildete Fläche, sondern kann in einem beliebigen Winkel zu diesen verlaufen und insbesondere auch eine gekrümmte, also etwa konvexe Form haben. Im letztgenannten Fall kann die Anlage des Aufsatzstückes am Rohrelement dann u. U. nicht flächig, sondern beispielsweise linienförmig ausgebildet sein.

Das Aufsatzstück gibt eine Durchgangsöffnung frei, in welche typischerweise nach dem Einbau der Dichtpackung ein zusätzliches Rohr, etwa ein Schutzrohr, eingeschoben werden kann. Ein Element des Aufsatzstückes liegt dann sowohl an dem Innenwandbereich des Rohrelements als auch an einem diesem gegenüberliegenden Außenwandbereich des zusätzlichen Rohres an, dichtet also die beiden gegeneinander. Zu diesem Zweck liegt das Element des Aufsatzstückes zwischen dem Innenwandbereich des Rohrelements und dem Außenwandbereich des zusätzlichen Rohres umlaufend vor, sodass in Rohrrichtung gesehen, also in der Richtung, in welcher die Länge des Rohres festgelegt ist, die Fläche zwischen dem Rohrelement und dem zusätzlichen Rohr von dem Element des Aufsatzstückes ausgefüllt ist Wenngleich hierfür ein einstückiges Element des Aufsatzstücks bevorzugt ist, sollen auch Ausführungsformen mit beispielsweise durch das Aufsatzstück verlaufenden Trennfugen nicht ausgeschlossen sein.

Das Rohrelement kann in Rohrrichtung gesehen einen im Wesentlichen kreisförmigen Querschnitt haben, jedoch sind auch andere Querschnittsformen möglich, insbesondere Querschnittsformen mit geraden Seitenflächen, wie beispielsweise eine rechteckige Querschnittsform. Der Bereich des Aufsatzstückes, in welchem Innenwand, Außenwand und Stirnfläche des Rohrelements eine Anlage finden, ist dann entsprechend an die Querschnittsform des Rohrelements angepasst Dabei ist in Abhängigkeit von den Materialeigenschaften des Aufsatzstückes nicht notwendigerweise eine exakte Anpassung notwendig, das Aufsatzstück kann beispielsweise auch durch die Außenwand des Rohrelements gedehnt oder durch dessen Innenwand gestaucht werden.

Gegenüber dem Stand der Technik, In dem ein Rohrelement mit Rohranschlussmuffe für genau einen Schutzrohrtyp mit entsprechendem Durchmesser und passender Querschnittsform geeignet ist, lassen sich durch die erfindungsgemäße Verwendung des Aufsatzstückes beispielsweise auch mehrere unterschiedliche Schutzrohre in ein Rohrelement einführen. Hierzu können etwa ansonsten identische Aufsatzstücke in Rohrrichtung gesehen kreisförmige Durchgangsöffnungen unterschiedlichen Durchmessers freigeben. Dabei ist es noch nicht mal notwendig, dass das Rohrelement und das Schutzrohr in Rohrrichtung gesehen dieselbe Querschnittsform haben, das Aufsatzstück kann also beispielsweise auch in einem Rohrelement mit rechteckigem Querschnitt sitzen und eine kreisförmige Durchgangsöffnung freigeben (und umgekehrt).

Bevorzugte Ausgestaltungen der Erfindung sind in den abhängigen Ansprüchen angegeben. Wie in der gesamten Offenbarung wird nicht im Einzelnen zwischen der Beschreibung der Verwendung und dem Vorrichtungsaspekt der durch die erfindungsgemäße Verwendung des Aufsatzstückes entstehenden Dichtpackung sowie entsprechenden Verfahrensaspekten unterschieden, die Offenbarung ist implizit im Hinblick auf sämtliche Kategorien zu verstehen.

Eine Ausgestaltung der Erfindung sieht vor, dass das Aufsatzstück die Stirnfläche des Rohrelements vollständig bedeckt. In der Richtung gesehen, aus welcher das zusätzliche Rohr dann in die Durchgangsöffnung eingeschoben werden kann, ist das Rohrelement also vollständig durch das Aufsatzstück abgeschirmt, sodass sich weder entlang der Außenwand noch entlang der Innenwand des Rohrelements von dessen Stirnfläche ausgehende Kriechpfade bilden können. Das Blockieren dieser Kriechpfade ist besonders vorteilhaft, weil Leitungen typischerweise in Bereichen mit erhöhter Feuchtigkeit, wie etwa dem Außenbereich eines Gebäudes, in Schutzrohren geführt werden. Durch die Abdeckung der Stirnfläche des Rohrelements zu diesem Bereich hin ist zumindest der direkte Feuchtigkeitseintrag an das Rohrelement blockiert

Das zusätzliche Rohr ist erfindungsgemäβß bis zu einem Anschlag am Aufsatzstück in die Durchgangsöffnung einschiebbar. Am Aufsatzstück kann also beispielsweise ein in Rohrrichtung gesehen in die Durchgangsöffnung hineinragender Vorsprung vorgesehen sein, bis zur Anlage an welchem das zusätzliche Rohr dann eingeschoben werden kann. Dem Monteur bietet dies eine zuverlässige Möglichkeit, um die richtige Positionierung des Schutzrohres in der Durchgangsöffnung sicherzustellen.

Eine weitere Ausgestaltung sieht außenseitig am Aufsatzstück einen sich von der Außenwand des Rohrelements weg erhebenden, um das Aufsatzstück umlaufenden Vorsprung vor. Der Vorsprung kann beispielsweise auch durch ein aufgeklebtes Dichtungsband geformt sein oder als gegebenenfalls in einer entsprechenden Vertiefung sitzender Dichtungsring vorliegen, jedoch ist ein an das Aufsatzstück angeformter oder mit diesem einstückig ausgebildeter Vorsprung bevorzugt. Der umlaufende Vorsprung muss dabei nicht notwendigerweise als durchgehender Körper ausgebildet sein, sodass beispielsweise bei einem aus mehreren Teilen zusammensetzbaren Aufsatzstück auch Trennfugen durch den Vorsprung verlaufen können. In Umlaufrichtung gesehen kann der Vorsprung das Querschnittsprofil einer Dichtlippe haben bzw. können neben einem sich quer zur Rohrrichtung erhebenden Hauptteil des Vorsprungs auch weitere Elemente an diesem vorgesehen sein, um den Außenumfang des Querschnittsprofils und damit Kriechpfade weiter zu verlängern. Zum selben Zweck kann der Vorsprung auch solchermaßen asymmetrisch sein, dass quer zur Rohrrichtung orientierte Seitenfläche länger sind als die zur Bohrrichtung parallele Seitenfläche, beispielsweise um in dieser Reihenfolge bevorzugt mindestens 50%, 75% oder 100%. "Quer zur Rohrrichtung" bezeichnet hierbei (wie in der gesamten Offenbarung) nicht notwendigerweise einen Winkel von 90° zur Rohrrichtung, sondern auch einen schrägen Winkel von 45° bis 135°, vorzugsweise von 65° bis 115°, besonders bevorzugt von 80° bis 100° zur Rohrrichtung. Nach einem späteren Einbau in ein Wand- oder Bodenelement kann der umlaufende Vorsprung als Sperre für Feuchtigkeit dienen, indem er Kriechpfade entlang der Außenseite des Aufsatzstückes verlängert und gegebenenfalls vollständig blockiert. Zu diesem Zweck können in Leitungsrichtung auch mehrere Vorsprünge vorgesehen sein, also insbesondere auch zwei oder drei, die dann beispielsweise im Wesentlichen parallel zueinander umlaufend angeordnet sein können.

Bei einer weiteren Ausführungsform ist am Aufsatzstück ein sich von der Innenwand des Rohrelements weg erhebender und innenseitig umlaufender Vorsprung vorgesehen, der wiederum auch als aufgeklebtes Dichtungsband oder Dichtungsring vorliegen kann, jedoch bevorzugt an das Aufsatzstück angeformt oder einstückig mit diesem ausgebildet ist. Entscheidend ist, dass nach dem Einschieben des zusätzlichen Rohres in die Durchgangsöffnung der Vorsprung an der Außenwand des zusätzlichen Rohres um dieses umlaufend anliegt. Besteht also zwischen der Durchgangsöffnung des Aufsatzstückes und der Außenwand des zusätzlichen Rohres u. U. fertigungs- und anwendungsbedingt noch ein gewisser Bewegungsfreiraum, so blockiert der Vorsprung dann hiermit einhergehende Kriechpfade zwischen der Außenwand des zusätzlichen Rohres und der Innenwand des Rohrelements. Es können wiederum auch mehrere Vorsprünge vorgesehen sein, also insbesondere auch ein zweiter bzw. dritter Vorsprung.

In weiterer Ausgestaltung sind der Vorsprung oder die Vorsprünge an das Aufsatzstück angeformt, was sowohl, bei einem innenseitig als auch bei einem außenseitig umlaufenden Vorsprung der Fall sein kann. Hierbei meint "angeformt", dass der Vorsprung an dem Aufsatzstück in einem eigenen Herstellungsschritt mittels einer seine Form freigebenden Kavität vorgesehen wird. Ein Aufsatzstück mit einem angeformten Vorsprung kann also beispielsweise in einem zweischrittigen Verfahren hergestellt werden, bei dem fließfähiges Kunststoffmaterial einer ersten Kavität, die dann das Aufsatzstück freigibt, zugeführt wird und in dieser aushärtet. Eine zweite Kavität, die den Vorsprung freigibt, wird dann derart gebildet, dass sie teilweise von dem Aufsatzstück begrenzt wird, sodass durch Zuführen von fließfähigem Kunststoffmaterial in die zweite Kavität und teilweises Aushärten des Kunststoffmaterials in dieser der Vorsprung direkt an das Aufsatzstück angeformt wird. Auf diese Weise lassen sich beispielsweise Verunreinigungen an der Grenzfläche zwischen Vorsprung und Aufsatzstück verringern, sodass eine Verbindung mit guten Haftungseigenschaften und folglich guter Dichtigkeit realisiert werden kann. Bezüglich weiterer Details zu Herstellungs- und Vorrichtungsaspekten wird verwiesen auf EP 09 015 990.6.

Bei einer anderen Ausgestaltung sind das Aufsatzstück und der Vorsprung oder das Aufsatzstück und die Vorsprünge einstückig ausgebildet. Bei dieser Ausführungsform verlaufen somit zwischen dem Aufsatzstück und dem Vorsprung keine Materialgrenzen, also keine gegebenenfalls auch unscharf ausgebildete Trennlinie zwischen Bereichen verschiedener Materialzusammensetzung bzw. unterschiedlicher Herstellungsgeschichte. Vorzugsweise verlaufen zwischen dem Aufsatzstück und dem Vorsprung auch keine Trennfugen, weiche wie Materialgrenzen als intrinsische Schwachstelle aufgetrennt werden und Undichtigkeiten zur Folge haben können. Dabei kann das Aufsatzstück beispielsweise aus einem Materialblock durch Abtragen von überflüssigem Material, etwa durch Bohren, Schleifen, Fräsen bzw. Drehen, hergestellt werden. Das Aufsatzstück kann jedoch auch einstückig von einer Kavität freigegeben werden, in welcher fließfähiges Kunststoffmaterial zu dem Aufsatzstück aushärtet. Bei dieser Ausführungsform weisen das Aufsatzstück und der Vorsprung dieselbe Materialzusammensetzung auf, sodass die Herstellung auf besonders einfache Weise möglich ist, weil vorzugsweise nur ein Materialtyp auf Lager gehalten und verarbeitet werden muss.

Bei einer weiteren Ausführungsform ist zur Anpassung der Durchgangsöffnung an einzuschiebende Rohre unterschiedlichen Querschnitts eine herausnehmbare Schicht für die Durchgangsöffnung vorgesehen. Eine Schicht in der Durchgangsöffnung ist ein Teil des Aufsatzstückes, der durch eine sich in Rohrrichtung erstreckende und umlaufende Trennfuge, also einen dünnen Schlitz, von dem übrigen Aufsatzstück zumindest bereichsweise getrennt ist. Auch in Abhängigkeit von den Abmessungen des Aufsatzstückes kann die Ausdehnung der durch die Trennfuge abgetrennten Schicht in Rohrrichtung jene quer dazu um ein Vielfaches übersteigen.

Sofern die Trennfuge die Schicht vollständig von dem übrigen Aufsatzstück trennt, ist die Schicht im in die Durchgangsöffnung eingesetzten Zustand dennoch als Tell des Aufsatzstückes zu verstehen. Die Trennfuge kann jedoch bspw. auch durch eine oder mehrere Materialbrücken, also zum Herausnehmen der Schicht auftrennbare Verbindungsstellen zwischen der Schicht und dem übrigen Aufsatzstück aus vorzugsweise dem selben Material wie die beiden, unterbrochen bzw. mit einem anderen Material, etwa einem Klebstoff, zumindest bereichsweise aufgefüllt sein. Die Trennfuge gibt jedenfalls eine bevorzugte Trennfläche oder Solltrennstellen zwischen der Schicht und dem übrigen Aufsatzstück vor, durch welche die Schicht in diesem Sinne "herausnehmbar" wird.

Im Falle einer durchgehenden Trennfuge kann die Schicht bspw. als lose in dem übrigen Aufsatzstück sitzender Körper vorliegen oder auch durch eine formschlüssige Verbindung in der Durchgangsöffnung gehalten sein, sodass etwa Vorsprünge am übrigen Aufsatzstück, die nach einem Herausnehmen der Schicht gegen ein einzuschiebendes Rohr dichten, in komplementäre Vertiefungen an einer Außenseite der Schicht greifen und letztere somit gegen eine Verschiebung in Rohrrichtung sichern können. Die Schicht ist also bei der Handhabung des Aufsatzstückes durch die Vorsprünge in der Durchgangsöffnung gehalten, kann jedoch unter gewisser Kraftaufbringung aus der Durchgangsöffnung genommen werden. Wird die Schicht zur Anpassung an ein Rohr mit kleinerer Querschnittfläche wieder eingesetzt, so halten die Vorsprünge die Schicht vorzugsweise wieder in der Durchgangsöffnung.

Es Ist ferner bevorzugt, dass an der Schicht ein sich zu dem einzuschiebenden Rohr hin erhebender, innenseitig umlaufender Vorsprung vorgesehen ist; besonders bevorzugt sind zwei oder drei solcher Vorsprünge vorgesehen. In eine derartige Schicht kann beispielsweise eine weitere Schicht mit zu den Vorsprüngen komplementären Vertiefungen an einer Außenseite eingeschoben werden, sodass auf diese Weise eine Schichtfolge aufgebaut wird. Ebenso wie eine einzelne Schicht zur Verringerung des Querschnitts der Durchgangsöffnung auch unabhängig von dem Aufsatzstück vertrieben werden kann, können dann zum selben Zweck auch mehrere ineinander setzbare Schichten als Satz angeboten werden.

Eine Folge mehrerer ineinander geschachtelter Schichten ist auch im Falle loser Schichten möglich, oder wenn Materialbrücken zwischen den Schichten vorgesehen sind. Die Materialbrücken können dann beispielsweise In Rohrrichtung endseitig vorliegen, etwa an der an die Stirnfläche des Rohrelements grenzenden Seite des Aufsatzstückes. Hierbei ist es ferner möglich, dass die Schichten untereinander und mit dem übrigen Aufsatzstück einstückig ausgebildet sind.

Bei einer weiteren Ausführungsform weist das Aufsatzstück elastisches Material als Bestandteil auf, vorzugsweise synthetisches Gummimaterial. Aufgrund der elastischen Materialeigenschaften dichtet das Aufsatzstück das eingeschobene Rohrelement sowohl gegen das in die Durchgangsöffnung einschiebbare zusätzliche Rohr als auch gegen das Wand- oder Bodenelement. Wird die Dichtpackung beispielsweise in Beton vergossen, so kann es beim Aushärten zu einem Schrumpfen des Betons kommen, es entsteht also ein Spalt zwischen dem typischerweise steifen Rohrelement und dem getrockneten Beton. Dieser Spalt kann durch die Ausdehnung eines zuvor durch den nicht getrockneten Beton komprimierten elastischen Aufsatzstückes an der Außenwand des Rohrelements zumindest teilweise verschlossen werden. Hierbei wird vorzugsweise synthetisches Gummimaterial, also etwa auf Basis von synthetischem Kautschuk hergestelltes Material, verwendet, wobei auch Zusatzstoffe, beispielsweise zur Verbesserung der Haltbarkeit und Optimierung der mechanischen Eigenschaften, beigemengt werden können.

In weiterer Ausgestaltung ist das Aufsatzstück dabei durch Pressen von synthetischem Kautschukmaterial in einer Form und Vulkanisieren des synthetischen Kautschukmaterials in der Form hergestellt. Die nachfolgend dargestellten Herstellungsschritte werden auch unabhängig von den Merkmalen des Hauptanspruchs als Erfindung angesehen und sollen zusammen mit den an anderen Stellen der Anmeldung offenbarten Verfahrensmerkmalen, insbesondere dem Herstellungsaspekt des erfindungsgemäßen Aufsetzens, in dieser Form offenbart sein.

Der Form wird vorzugsweise bei Raumtemperatur fließfähiges, das heißt mit bestimmter Viskosität flüssiges, synthetisch hergestelltes Kautschukmaterial zugeführt und in der Form gepresst, also einem Druck von 80 bis 120 bar, vorzugsweise 90 bis 110 bar, besonders bevorzugt 95 bis 105 bar, ausgesetzt Die Temperatur liegt beim Pressen über der Raumtemperatur, insbesondere über 170° C, vorzugsweise über 180° C und besonders bevorzugt über 190° C. Als Maximaltemperatur werden vorzugsweise 210° C, besonders bevorzugt 200° C, nicht überschritten. Unter diesen Bedingungen findet eine Vernetzung der langkettigen Kautschukmoleküle statt, wodurch das fließfähige Kautschukmaterial in im Wesentlichen elastisches Gummimaterial übergeführt wird. Das synthetische Kautschukmaterial kann dabei beispielsweise Styrol, Butadien, Styrolacrylat, Reinacrylat bzw. Vinylacetat als Bestandteil aufweisen.

In weiterer Ausgestaltung der erfindungsgemäßen Verwendung erfolgt ein permanenter Einbau der Dichtpackung in ein Wand- oder Bodenelement mit fließfähigem Material, welches dann erstarrt und an einer Außenfläche des Aufsatzstückes formschlüssig anliegt. Diese Einbauvariante ist bevorzugt, wenngleich auch ein Einbau durch Verschäumen, etwa mit PU-Schaum, möglich wäre. Da das Rohrelement einer Dichtpackung typischerweise aus einem steifen Material, in das eine Krafteinleitung verformungsarm erfolgt, aufgebaut ist, wird das auf das Rohrelement aufgesetzte Aufsatzstück trotz seiner elastischen Materialeigenschaften beim Vergießen nur im Außenwandbereich des Rohrelements verformt, sodass insbesondere die Durchgangsöffnung weiter freigehalten wird. Das dann erstamte Material, etwa auf Zementbasis oder auch auf synthetischer Basis, lagefixiert das Aufsatzstück und wird gleichzeitig von diesem gegen das Rohrelement gedichtet. Da typischerweise ein steifes Rohrelement vorgesehen wird, kann infolge eines Schrumpfens beim Erstarren des zuvor fließfähigen Materials ein Spalt zwischen diesem und dem Rohrelement entstehen. Eine besondere Wechselwirkung von Aufsatzstück und Rohrelement besteht nun gerade darin, dass das Aufsatzstück einerseits diesen Spalt dichtet und andererseits vom steifen Rohrelement beim Einbau in das Wand- oder Bodenelement in seiner Form bzw. Position stabilisiert wird.

Vorzugsweise ist das fließfähige Material, welches dann erstarrt. Beton oder Mörtel. In beiden Materialien ist dabei als Bindemittel Zement enthalten, welcher nach dem Anrühren mit Wasser infolge chemischer Reaktionen erstarrt.

In weiterer Ausgestaltung grenzt das die Stirnfläche des Rohrelements vollständig bedeckende Aufsatzstück an eine Fläche des Wand- oder Bodenelements und trennt diese von dem Rohrelement. Das Aufsatzstück bedeckt also eine Stirnfläche des Rohrelements vollständig und trennt somit das innerhalb des Wand- oder Bodenelements angeordnete Rohrelement von einer Außen- oder Seitenfläche. In der Richtung gesehen, aus welcher das zusätzliche Rohr in die Durchgangsöffnung eingeschoben werden kann, also auf die an das Aufsatzstück grenzende Seitenfläche blickend, ist das Rohrelement durch das Aufsatzstück vollständig abgeschirmt, und dieses dichtet sowohl zum Wand- oder Bodenelement hin als auch zu einem einschiebbaren zusätzlichen Rohr hin.

Die Erfindung bezieht sich auch auf eine Leitungsdurchführungsanordnung mit einer Dichtpackung, welche in ein Wand- oder Bodenelement eingebaut wird und ein Rohrelement aufweist, wobei ein Aufsatzstück in einer Richtung solchermaßen auf das Rohrelement aufgeschoben ist, dass das Aufsatzstück an einem Innenwandbereich, einem diesem entgegengesetzten Außenwandbereich sowie an einer diese beiden verbindenden Stirnfläche des Rohrelements anliegt. Dabei gibt das Aufsatzstück eine Durchgangsöffnung frei, In welche aus der Richtung ein zusätzliches Rohr solchermaßen ist, dass ein Element des Aufsatzstückes zwischen dem Innenwandbereich des Rohrelements und einem diesem gegenüberliegenden Außenwandbereich des zusätzlichen Rohres angeordnet ist, wobei durch das Rohrelement und das zusätzliche Rohr eine Leitung hindurchgeführt ist.

In weiterer Ausgestaltung ist die Leitungsdurchführunganordnung dabei um eines oder mehrere der zuvor dargestellten Merkmale ergänzt.

Ferner bezieht sich die Erfindung auch auf die Verwendung einer solchen Leitungsdurchführunganordnung für einen Einbau in ein Wand- oder Bodenelement in der zuvor beschriebenen Weise.

Im Folgenden wird die Erfindung anhand eines Ausführungsbeispiels näher erläutert, wobei die einzelnen Merkmale auch in anderen Kombinationen erfindungswesentlich sein können und sich implizit auf alle Kategorien der Erfindung beziehen.
- Figur 1: zeigt eine Dichtpackung mit Rohrelement aus dem Stand der Technik,
- Figur 2: zeigt ein Rohrelement mit Aufsatzstück,
- Figur 3: zeigt ein Rohrelement mit Aufsatzstück und einem Schutzrohr.
- Figur 4: zeigt ein Aufsatzstück mit einer Schicht in der Durchgangsöffnung.

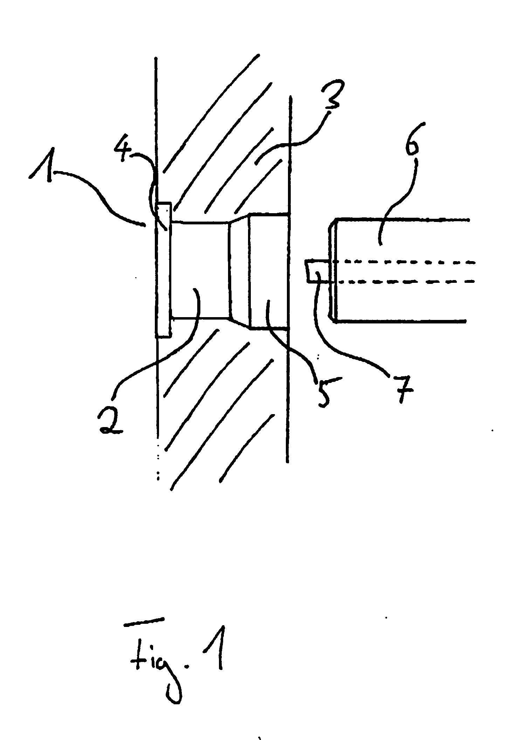

Figur 1 zeigt eine Dichtpackung 1 mit einem Rohrelement 2 zum Durchführen einer Leitung durch ein Wandelement 3 aus Beton, in welchem die Dichtpackung 1 einbetoniert ist. Dabei grenzt an eine Seite der Wand 3 die Dichtpackung 1 mit einem Flansch 4, der für den Einbau der Dichtpackung 1 an einer Schalung aus beispielsweise Holz oder Stahl befestigt wird und die Dichtpackung 1 beim Vergießen mit Beton in Position hält. Die Rohranschlussmuffe 5 ist dabei auf ein Schutzrohr 6 abgestimmt, welches die hindurchzuführende Leitung 7 umgibt. Es muss also bereits bei der Herstellung der Dichtpackung 1 mit Rohrelement 2 genau festgelegt sein, in welchem Schutzrohr 6 die Leitung 7 an das Gebäude herangeführt wird, damit das entsprechend passende und auch nur zu diesem Schutzrohr passende Rohrelement 2 vorgesehen wird.

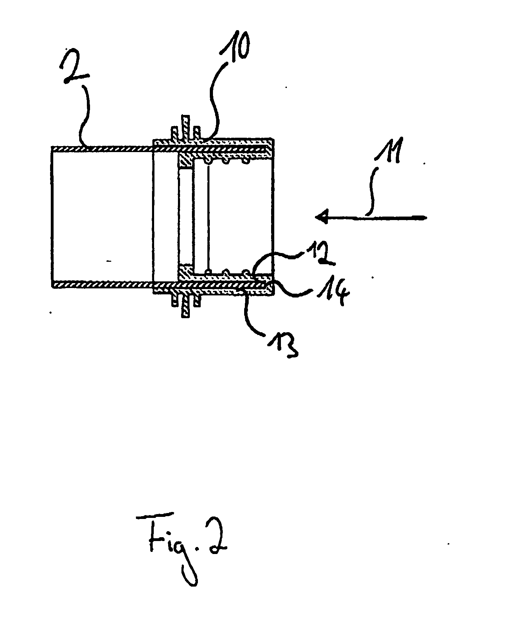

Figur 2 veranschaulicht die erfindungsgemäße Verwendung eines Aufsatzstückes 10 anstelle eines Rohrelements 2 mit Anschlussmuffe 5. Das Aufsatzstück 10 wird aus einer Richtung 11, die zur Leitungsrichtung parallel ist, auf das Rohrelement 2 geschoben und liegt dann an einem Innenwandbereich 12, einem diesem entgegengesetzten Außenwandbereich 13 sowie einer diese beiden verbindenden Stirnfläche 14 des Rohrelements an. Hierbei hat das Rohrelement 2 eine in Rohrrichtung gesehen kreisförmige Querschnittsform mit über die gesamte Länge des Rohrelements 2 konstantem Durchmesser, sodass das Rohrelement 2 besonders einfach herzustellen ist.

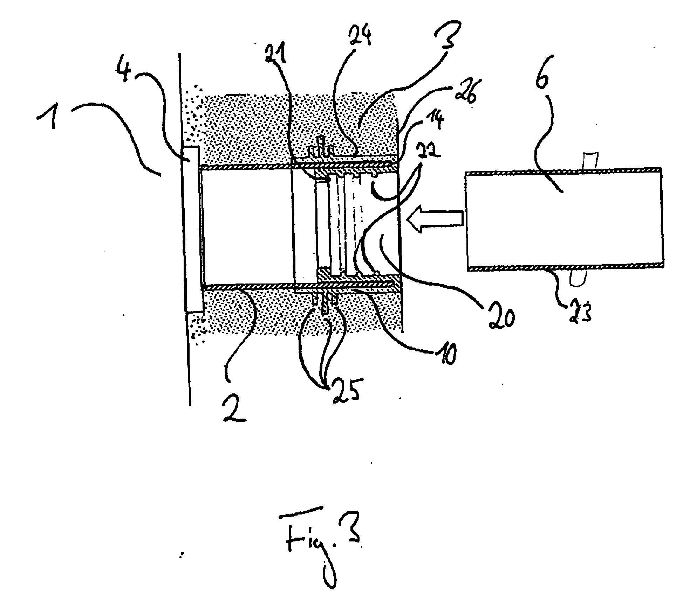

Figur 3 zeigt eine Dichtpackung 1 mit Rohrelement 2 und einen auf diesem aufgesetzten Aufsatzstück 10 nach einem Einbau in ein Wandelement 3. An die eine Seite der Wand 3 grenzt die Dichtpackung 1 mit einem zuvor beschriebenen Flansch 4 und an die andere Seite der Wand 3 mit dem Aufsatzstück 10, welches eine Durchgangsöffnung 20 freigibt, in die das Schutzrohr 6 eingeschoben werden kann. Nach dem Einschieben des Schutzrohres 6 in die Durchgangsöffnung 20 bis zum Anschlag 21 am Aufsatzstück 10 dichten die innenseitig umlaufenden Vorsprünge 22 gegen die Außenwand 23 des Schutzrohres 6. Um Kriechpfade entlang des Rohrelements 2 zu blockieren, ist die Stirnfläche 14 vollständig von dem Aufsatzstück 10 bedeckt, das Aufsatzstück 10 trennt das Rohrelement 2 von einer Außenfläche 26 der Wand 3 und grenzt dabei an diese an. Um ferner auch Kriechpfade entlang der Außenseite 24 des Aufsatzstückes 10 zu verlängern, sind an diesem außenseitig umlaufende Vorsprünge 25 vorgesehen, welche formschlüssig in das erstarrte Betonmaterial des Wandelements 3 integriert sind und aufgrund der elastischen Materialeigenschaften des Aufsatzstückes 10 trotz des beim Trocknen schrumpfenden Betons dichtend zu diesem schließen. Die Vorsprünge 25 können dabei in einer in Figur 3 dargestellten, die Leitungsrichtung beinhaltenden Schnittebene im Wesentlichen parallele Flanken haben, jedoch können die Flanken eines Vorsprungs 25 zu dessen freiem Ende hin auch auseinanderlaufen, um Kriechwege weiter zu verlängern. Andererseits können die Flanken auch zu dem freien Ende hin aufeinander zu laufen oder zumindest hinterschnittfrei ausgebildet sein, um beispielsweise das Entformen des Aufsatzstückes 10 zu erleichtern.

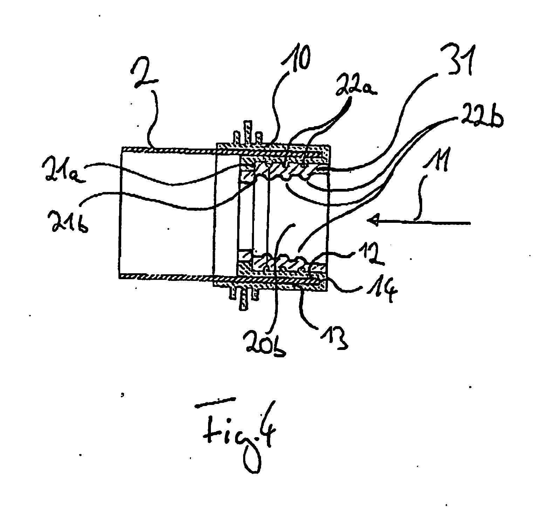

Figur 4 zeigt wie Figur 2 die erfindungsgemäße Verwendung eines Aufsatzstückes 10, das aus der Richtung 11 auf das Rohrelement 2 geschoben ist. Dabei kann aus der selben Richtung 11 eine Schicht 31 in die Durchgangsöffnung 20a eingeschoben werden, sodass die Schicht 31 dann als Teil des Aufsatzstückes 10 eine Durchgangsöffnung 20b mit verringertem Durchmesser freigibt, in die ein zusätzliches Rohr 6 eingeschoben werden kann. Im Falle einer herausgenommenen Schicht 31 gegen die Außenwand eines zusätzlichen Rohres größeren Durchmessers dichtende Vorsprünge 22a halten im Falle einer eingesetzten Schicht 31 diese durch einen Formschluss mit Vertiefungen an ihrer Außenseite. Dieser Formschluss hält die Schicht in Position, wobei in der Einschieberichtung 11 die Schicht 31 ferner am Anschlag 21 a, der ansonsten einem Rohr 6 mit größerem Durchmesser eine Position vorgibt, eine Anlage findet. Damit ist die Schicht gegen ein Verrutschen in das Rohr hinein zusätzlich gesichert, kann jedoch unter Überwindung des Formschlusses in der entgegensetzten Richtung aus der Durchgangsöffnung herausgenommen werden. In der Schicht sind innenseitig umlaufende Vorsprünge 22b vorgesehen, die gegen ein einzuschiebendes Rohr dichten und auch eine weitere Schicht mit komplementären Vertiefungen in Position halten können.

## Patentansprüche

1. Verwendung eines Aufsatzstückes (10),
zum Aufsetzen auf ein Rohrelement (2) einer Dichtpackung (1), die in ein Wand- oder Bodenelement (3) eingebaut wird,
wobei das Aufsatzstück (10) in einer Richtung (11) solchermaßen auf das Rohrelement (2) aufgeschoben ist,
dass das Aufsatzstück (10) an einem Innenwandbereich (12), einem diesem entgegengesetzten Außenwandbereich (13) sowie an einer diese beiden verbindenden Stirnfläche (14) des Rohrelements (2) anliegt, wobei das Aufsatzstück (10) eine Durchgangsöffnung (20) freigibt,
in welche aus der Richtung (11) ein zusätzliches Rohr (6) solchermaßen bis zu einem Anschlag (21) am Aufsatzstück (10) in die Durchgangsöffnung (20) eingeschoben ist,
dass ein Element des Aufsatzstückes (10) zwischen dem innenwandbereich (12) des Rohrelements und einem diesem gegenüberliegenden Außenwandbereich (23) des zusätzlichen Rohres (6) angeordnet ist,
und zum Hindurchführen einer Leitung (7) durch das Rohrelement (2) und das zusätzliche Rohr (6).

2. Verwendung nach Anspruch 1, wobei das Aufsatzstück (10) die Stirnfläche (14) des Rohrelements (2) vollständig bedeckt.

3. Verwendung nach einem der vorstehenden Ansprüche, wobei außenseitig am Aufsatzstück (10) ein sich von der Außenwand (13) des Rohrelements (2) weg erhebender, um das Aufsatzstück (10) umlaufender Vorsprung (25) vorgesehen ist.

4. Verwendung nach einem der vorstehenden Ansprüche, wobei am Aufsatzstück (10) ein sich von der Innenwand (12) des Rohrelements (2) weg erhebender innenseitig umlaufender Vorsprung (22) vorgesehen ist.

5. Verwendung nach Anspruch 3 oder 4, wobei der Vorsprung (21,25) oder die Vorsprünge (21,26) an das Aufsatzstück (10) angeformt sind.

6. Verwendung nach Anspruch 3 oder 4, wobei das Aufsatzstück (10) und der Vorsprung (21,25) oder die Vorsprünge (21,25) einstückig ausgebildet sind.

7. Verwendung nach einem der vorstehenden Ansprüche, wobei zur Anpassung der Durchgangsöffnung (20) an einzuschiebende Rohre (6) unterschiedlichen Querschnitts eine herausnehmbare Schicht (31) für die Durchgangsöffnung (20) vorgesehen ist.

8. Verwendung nach einem der vorstehenden Ansprüche, wobei das Aufsatzstück (10) elastisches Material als Bestandteil aufweist, vorzugsweise synthetisches Gummimaterial.

9. Verwendung nach Anspruch 8, wobei das Aufsatzstück (10) durch Pressen von synthetischem Kautschukmaterial in einer Form und Vulkanisieren des synthetischen Kautschukmaterials in der Form hergestellt ist.

10. Verwendung nach einem der vorstehenden Ansprüche, bei der ein permanenter Einbau der Dichtpackung (1) in ein Wand- oder Bodenelement (3) mit fließfähigem Material, vorzugsweise Beton oder Mörtel, erfolgt, welches dann erstarrt und an einer Außenfläche (24) des Aufsatzstückes (10) formschlüssig anliegt.

11. Verwendung nach Anspruch 10 in Verbindung mit Anspruch 2, wobei das die Stirnfläche (14) des Rohrelements (2) vollständig bedeckende Aufsatzstück (10) an eine Fläche (26) des Wand- oder Bodenelements (3) grenzt und diese von dem Rohrelement (2) trennt.

12. Leitungsdurchführungsanordnung mit einer Dichtpackung (1) mit einem Rohrelement (2), weiche in ein Wand- oder Bodenelement (3) eingebaut wird,
wobei ein Aufsatzstück (10) in einer Richtung (11) solchermaßen auf das Rohrelement (2) aufgeschoben ist,
dass das Aufsatzstück (10) an einem Innenwandbereich (12), einem diesem entgegengesetzten Außenwandbereich (13) sowie an einer diese beiden verbindenden Stirnfläche (14) des Rohrelements (2) anliegt,
wobei das Aufsatzstück (10) eine Durchgangsöffnung (20) freigibt,
in welche aus der Richtung (11) ein zusätzliches Rohr (6) solchermaßen bis zu einem Anschlag (21) am Aufsatzstück (10) in die Durchgangsöffnung (20) eingeschoben ist,
dass ein Element des Aufsatzstückes zwischen dem Innenwandberelch - (12) des Rohrelements und einem diesem gegenüberliegenden Außenwandbereich (23) des zusätzlichen Rohres (6) angeordnet ist,
wobei durch das Rohrelement (2) und das zusätzliche Rohr (6) eine Leitung (7) hindurchgeführt ist.

13. Leitungsdurchführungsanordnung nach Anspruch 12, welche durch eine Verwendung nach einem der Ansprüche 2 bis 9 hergestellt ist.

14. Verwendung einer Leitungsdurchführungsanordnung nach Anspruch 12 oder 13 für einen Einbau in ein Wand- oder Bodenelement (3) gemäß Anspruch 10 oder 11.

## Claims

1. The use of an attachment piece (10)
for the attachment to a tube element (2) of a seal packing (1) which is inserted into a wall or floor element (3),
said attachment piece (10) being pushed onto said tube element (2) in a direction (11) in such a way
that said attachment piece (10) rests against an inner wall region (12), an outer wall region (13) opposite the latter, and a front surface (14) of said tube element (2) connecting these two,
said attachment piece (10) exposing a passage opening (20) into which an additional tube (6) is pushed into said passage opening (20) from said direction (11) up to a stop (21) on said attachment piece (10) in such a way
that an element of said attachment piece (10) is disposed between said inner wall region (12) of said tube element and an outer wall region (23) of said additional tube (6) lying opposite the latter
and for passing a line (7) through said tube element (2) and said additional tube (6).

2. The use according to Claim 1, said attachment piece (10) completely covering said front surface (14) of said tube element (2).

3. The use according to any of the above claims, on the outside of said attachment piece (20) a projection (25) running around said attachment piece (10) lifting away from said outer wall (13) of said tube element (2) being provided.

4. The use according to any of the above claims, on said attachment piece (10) a projection (22) running around the inside lifting away from said inner wall (12) of said tube element (2) being provided.

5. The use according to Claim 3 or 4, said projection (21, 25) or said projections (21, 25) being moulded onto said attachment piece (10).

6. The use according to Claim 3 or 4, said attachment piece (10) and said projection (21, 25) or said projections (21, 25) being formed as one piece.

7. The use according to any of the preceding claims, a removeable layer (31) for said passage opening (20) being provided in order to adapt said passage opening (20) to tubes (6) to be inserted with different cross-sections.

8. The use according to any of the preceding claims, said attachment piece (10) having elastic material, preferably synthetic rubber material, as a component part.

9. The use according to Claim 8, said attachment piece (10) being produced by pressing synthetic rubber material in a mould and vulcanising said synthetic rubber material in said mould.

10. The use according to any of the preceding claims, in which a permanent insertion of said seal packing (1) into a wall or floor element (3) is implemented with pourable material, preferably concrete or mortar, which then hardens and rests, with form-fit, against an outer surface (24) of said attachment piece (10).

11. The use according to Claim 10 in conjunction with Claim 2, said attachment piece (10) completely covering the front surface (14) of the tube element (20) bordering on a surface (26) of said wall or floor element (3) and separating the latter from said tube element (2).

12. A line feedthrough arrangement comprising a seal packing (10) with a tube element (2) which is inserted into a wall or floor element (3),
an attachment piece (10) being pushed onto said tube element (2) in a direction (11) in such a way
that said attachment piece (10) rests against an inner wall region (12), an outer wall region (13) opposite the latter, and a front surface (14) of said tube element (2) connecting both of the latter,
said attachment piece (10) exposing a passage opening (20) into which an additional tube (6) is pushed into said passage opening (20) from said direction (11) up to a stop (21) on said attachment piece (10) in such a way
that an element of said attachment piece is disposed between said inner wall region (12) of said tube element and an outer wall region (23) of said additional tube (6) lying opposite the latter,
a line (7) being passed through said tube element (2) and said additional tube (6).

13. The line feedthrough arrangement according to Claim 12 which is produced by use according to any of Claims 2 to 9.

14. The use of a line feedthrough arrangement according to Claim 12 or 13 for insertion into a wall or floor element (3) according to Claim 10 or 11.

## Revendications

1. Utilisation d'une pièce rapportée (10),
pour insérer sur un élément de tuyau (2) d'un presse-étoupe (1) encastré dans un élément de paroi ou de sol (3),
dans laquelle la pièce rapportée (10) est repoussée sur l'élément de tuyau (2) dans un sens (11 ) tel que
la pièce rapportée (10) vient se placer contre une zone de paroi intérieure (12), une zone de paroi extérieure (13) opposée à cette dernière, ainsi qu'une face frontale (14) reliant ces deux parois de l'élément de tuyau (2),
la pièce rapportée (10) dégageant une ouverture de traversée (20),
dans laquelle ouverture un tuyau supplémentaire (6) est repoussé dans le sens (11) jusqu'à une butée (21) présente sur la pièce rapportée (10) dans l'ouverture de traversée (20) de telle manière que
un élément de la pièce rapportée (10) se situe entre la zone de paroi intérieure (12) de l'élément de tuyau et une zone de paroi extérieure (23) du tuyau supplémentaire (6) opposée à cette dernière,
et guider le passage d'une conduite (7) à travers l'élément de tuyau (2) et le tuyau supplémentaire (6).

2. Utilisation selon la revendication 1, dans laquelle la pièce rapportée (10) recouvre entièrement la face frontale (14) de l'élément de tuyau (2).

3. Utilisation selon l'une des revendications précédentes, dans laquelle il est prévu, sur l'extérieur de la pièce rapportée (10), une saillie (25) qui s'élève en s'écartant de la paroi extérieure (13) de l'élément de tuyau (2) et qui entoure la pièce rapportée (10).

4. Utilisation selon l'une des revendications précédentes, dans laquelle il est prévu, sur la pièce rapportée (10), une saillie (22) circonférentielle intérieure qui s'élève en s'écartant de la paroi intérieure (12) de l'élément de tuyau (2).

5. Utilisation selon la revendication 3 ou 4, dans laquelle la saillie (21, 25) ou les saillies (21, 25) sont formées sur la pièce rapportée (10).

6. Utilisation selon la revendication 3 ou 4, dans laquelle la pièce rapportée (10) et la saillie (21, 25) ou les saillies (21, 25) sont constituées d'un seul tenant.

7. Utilisation selon l'une des revendications précédentes, dans laquelle, pour adapter l'ouverture de traversée (20) à l'introduction de tuyaux (6) de diverses sections transversales, il est prévu une couche (31) retirable destinée à l'ouverture de traversée (20).

8. Utilisation selon l'une des revendications précédentes, dans laquelle la pièce rapportée (10) présente comme constituant un matériau élastique, de préférence un matériau de caoutchouc synthétique.

9. Utilisation selon la revendication 8, dans laquelle la pièce rapportée (10) est fabriquée par compression d'un matériau de caoutchouc synthétique dans un moule et vulcanisation du matériau de caoutchouc synthétique dans ledit moule.

10. Utilisation selon l'une des revendications précédentes, dans laquelle il est effectué une installation permanente du presse-étoupe (1) dans un élément de paroi ou de sol (3) au moyen d'un matériau fluide, de préférence du béton ou du mortier, qui durcit ensuite pour demeurer sur une surface extérieure (24) de la pièce rapportée (10) en complémentarité de forme.

11. Utilisation selon la revendication 10 en conjonction avec la revendication 2, dans laquelle la pièce rapportée (10) recouvrant entièrement la face frontale (14) de l'élément de tuyau (2) affleure une face (26) de l'élément de paroi ou de sol (3) et sépare cette dernière de l'élément de tuyau (2).

12. Dispositif de traversée de conduite comportant un presse-étoupe (1) présentant un élément de tuyau (2), lequel presse-étoupe venant s'encastrer dans un élément de paroi ou de sol (3),
dans lequel une pièce rapportée (10) est repoussée sur l'élément de tuyau (2) dans un sens (11) tel que
la pièce rapportée (10) vient se placer contre une zone de paroi intérieure (12), une zone de paroi extérieure (13) opposée à cette dernière, ainsi qu'une face frontale (14) reliant ces deux parois de l'élément de tuyau (2),
la pièce rapportée (10) dégageant une ouverture de traversée (20),
dans laquelle ouverture un tuyau supplémentaire (6) est repoussé dans le sens (11) jusqu'à une butée (21) présente sur la pièce rapportée (10) dans l'ouverture de traversée (20) de telle manière que
un élément de la pièce rapportée se situe entre la zone de paroi intérieure (12) de l'élément de tuyau et une zone de paroi extérieure (23) du tuyau supplémentaire (6) opposée à cette dernière,
moyennant lequel une conduite (7) traversant l'élément de tuyau (2) et le tuyau supplémentaire (6) peut être introduite.

13. Dispositif de traversée de conduite selon la revendication 12, produit en mettant en oeuvre une utilisation selon l'une des revendications 2 à 9.

14. Utilisation d'un dispositif de traversée de conduite selon la revendication 12 ou 13 pour une installation effectuée dans un élément de paroi ou de sol (3) conformément à la revendication 10 ou 11.
